(19) Europäisches Patentamt
European Patent Office
Office européen des brevets

(11) **EP 2 256 141 B1**

(12) **EUROPÄISCHE PATENTSCHRIFT**

(45) Veröffentlichungstag und Bekanntmachung des Hinweises auf die Patenterteilung:
**08.10.2014 Patentblatt 2014/41**

(51) Int Cl.:
**C08G 18/66** *(2006.01)* **C08G 18/24** *(2006.01)*
**C08J 9/00** *(2006.01)* **C08G 18/48** *(2006.01)*
**C08G 101/00** *(2006.01)*

(21) Anmeldenummer: **10005107.7**

(22) Anmeldetag: **14.05.2010**

(54) **Verfahren zur Herstellung von Polyurethan-Weichschaumstoffen mit niedriger Emission**

Method for manufacturing polyurethane soft foam material with low emissions

Méthode de fabrication d'une mousse de polyuréthane flexible ayant de faibles émissions

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **27.05.2009 DE 102009022817**

(43) Veröffentlichungstag der Anmeldung:
**01.12.2010 Patentblatt 2010/48**

(73) Patentinhaber: **Bayer Intellectual Property GmbH**
**40789 Monheim (DE)**

(72) Erfinder:
• **Gossner, Matthäus**
**51061 Köln (DE)**
• **Haas, Peter**
**42781 Haan (DE)**
• **Meyer-Ahrens, Sven**
**51375 Leverkusen (DE)**
• **Kleszczewski, Bert**
**51069 Köln (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**EP-A1- 1 167 410    US-A- 3 397 158**
**US-A- 5 908 871**

Bemerkungen:
Die Akte enthält technische Angaben, die nach dem Eingang der Anmeldung eingereicht wurden und die nicht in dieser Patentschrift enthalten sind.

**Beschreibung**

Der Gegenstand der vorliegenden Erfindung betrifft ein Verfahren zur Herstellung von Polyurethanschaumstoffen, insbesondere von Polyurethanweichschaumstoffen, wobei die resultierenden Polyurethanschaumstoffe niedrige Emissionswerte und eine gute Beständigkeit gegen Alterung aufweisen.

Es ist aus dem Stand der Technik bekannt, dass Polyurethanschaumstoffe flüchtige organische Bestandteile (VOC) emittieren können, wobei diese Emission im Allgemeinen unerwünscht ist. Nachgewiesen werden diese Emissionen z.B. bei Messungen nach der Methode gemäß VDA 278.

In DE-A 1 121 802 und US 3 397 158 wird ein Verfahren zur Herstellung von Polyurethanschaumstoffen mit Hilfe von Zinn(II)-salzen von Carbonsäuren mit 1 bis 18 Kohlenstoffatomen wie Zinn(II)-octoat, Zinn(II)-oleat, Zinn(II)-stearat, Zinn(II)-acetat oder Zinn(II)-(2-ethylhexoat) offenbart.

Ebenfalls bekannt ist ein Verfahren zur Herstellung von Polyurethanschaumstoffen mit Hilfe des Zinn(II)-Salzes der Ricinolsäure, $Sn(C_{18}H_{33}O_3)_2$, beispielsweise Kosmos® EF von der Firma Evonik Goldschmidt GmbH, 45127 Essen, Deutschland.

Die aus dem Stand der Technik bekannten Zinnkatalysatoren haben bei der Herstellung von Polyurethanschaumstoffen eine Reihe von Nachteilen wie hohe Emissions- bzw. Foggingwerte (z. B. gemäß VDA 278), reduzierte mechanische Eigenschaften nach Alterung.

Es bestand ein großer Bedarf Polyurethanschaumstoffe bereit zustellen, die sowohl eine niedrige Emission aufweisen wie auch eine gute Beständigkeit gegen Alterung (insbesondere ein gutes Werteniveau bzgl. des Druckverformungsrests) aufweisen. Die Aufgabe der vorliegenden Erfindung ist daher, ein Verfahren bereitzustellen, welches die Herstellung von Polyurethanschaumstoffen, insbesondere Polyurethanweichschaumstoffe erlaubt, die sowohl eine niedrige Emission wie auch eine gute Beständigkeit gegen Alterung (insbesondere ein gutes Werteniveau des Druckverformungsrests und der Werte nach Heißluftalterung sowie nach Alterung im Dampfautoklaven) aufweisen.

Diese Aufgabe wird gelöst durch ein Verfahren zur Herstellung von Polyurethanschaumstoffen, vorzugsweise zur Herstellung von Polyurethanweichschaumstoffe, aus

A1   gegenüber Isocyanaten reaktionsfähigen Wasserstoffatomen aufweisenden Verbindungen mit einem Molekulargewicht von 400 - 15.000,

A2   gegebenenfalls gegenüber Isocyanaten reaktionsfähigen Wasserstoffatomen aufweisenden Verbindungen mit einem Molekulargewicht von 62 - 399,

A3   Wasser und/oder physikalisches Treibmittel,

A4   ggf. Hilfs- und Zusatzstoffe wie
a) von Komponente A5 verschiedene Katalysatoren,
b) oberflächenaktive Zusatzstoffe,
c) Pigmente oder Flammschutzmittel,

A5   mindestens ein Zinn(II)-Salz von Carbonsäuren, wobei die Carbonsäure von 10 bis 16 Kohlenstoffatome aufweist, und

B   Di- oder Polyisocyanaten.

Gegenstand der vorliegenden Erfindung ist insbesondere ein Verfahren zur Herstellung von Polyurethanschaumstoffen, vorzugsweise zur Herstellung von Polyurethanweichschaumstoffen, aus

Komponente A:

A1   75 bis 99,5 Gew.-Teile, bevorzugt 89 bis 97,8 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 400 - 15.000,

A2   0 bis 10 Gew.-Teile, bevorzugt 0 bis 2 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 62 - 399,

A3   0,5 bis 25 Gew.-Teile, bevorzugt 2 bis 5 Gew.-Teile (bezogen auf die Summe der Gew.-Teile der Komponenten A1 bis A4) Wasser und/oder physikalische Treibmittel,

A4   0 bis 10 Gew.-Teile, bevorzugt 0,2 bis 4 Gew.-Teile (bezogen auf die Summe der Gew.-Teile der Komponenten A1 bis A4) Hilfs- und Zusatzstoffe wie
a) von Komponente A4 verschiedene Katalysatoren,
b) oberflächenaktive Zusatzstoffe,

(fortgesetzt)

c) Pigmente oder Flammschutzmittel,

A5    0,01 - 5 Gew.-Teile, bevorzugt 0,05 - 2 Gew.-Teile, besonders bevorzugt 0,1 - 1 Gew.-Teile (bezogen auf die Summe der Gew.-Teile der Komponenten A1 bis A4) mindestens ein Zinn(II)-Salz von Carbonsäuren, wobei die Carbonsäure von 10 bis 16 Kohlenstoffatome aufweist, und

Komponente B:

B    Di- oder Polyisocyanaten,

wobei die Herstellung bei einer Kennzahl von 50 bis 250, bevorzugt von 70 bis 150, besonders bevorzugt von 95 bis 125 erfolgt, und

wobei alle Gewichtsteilangaben der Komponenten A1 bis A4 in der vorliegenden Anmeldung so normiert sind, dass die Summe der Gewichtsteile der Komponenten A1+A2+A3+A4 in der Zusammensetzung 100 ergibt.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Es handelt sich dabei vorwiegend um Urethan- und/oder Uretdion- und/oder Harnstoff und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis können die nachfolgend näher beschriebenen Komponenten eingesetzt werden.

Komponente A1

Ausgangskomponenten gemäß Komponente A1 sind Verbindungen mit mindestens zwei gegenüber Isocyanten reaktionsfähigen Wasserstoffatomen von einem Molekulargewicht in der Regel von 400 - 15.000. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyether sind erfindungsgemäß bevorzugt.

Komponente A2

Gegebenenfalls werden als Komponente A2 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A2 Ethanolamin, Diethanolamin, Triethanolamin, Sorbit und/oder Glycerin eingesetzt werden. Weitere Beispiele für Verbindungen gemäß Komponente A2 werden in EP-A 0 007 502, Seiten 16 - 17, beschrieben.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden gegebenenfalls Hilfs- und Zusatzstoffe verwendet wie

a) Von Komponente A5 verschiedene Katalysatoren (Aktivatoren),

b) oberflächenaktive Zusatzstoffe (Tenside), wie Emulgatoren und Schaumstabilisatoren insbesodere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff).

Komponente A5

Als Komponente A5 werden Zinn(II)-Salze von Carbonsäuren eingesetzt, wobei die jeweils zugrundeliegende Carbonsäure von 10 bis 16 vorzugsweise von 12 bis 16 Kohlenstoffatome aufweist. Vorzugsweise werden im erfindungsgemäßen Verfahren neben der Komponente A5 keine weiteren Zinn(II)-Salze von Carbonsäuren eingesetzt.

In einer bevorzugten Ausführungsform der Erfindung wird als Komponente A5 mindesten ein Zinn(II)-Salz der Formel (I)

$$Sn(C_xH_{2x+1}COO)_2 \qquad (I)$$

eingesetzt, wobei x eine ganze Zahl von 9 bis 15, bevorzugt von 11 bis 15 bedeutet.

Besonders bevorzugt ist in Formel (I) die Alkylkette $C_xH_{2X+1}$ des Carboxylats eine verzweigte Kohlenstoffkette, d.h. $C_xH_{2X+1}$ ist eine *iso*-Alkylgruppe.

Ganz besonders bevorzugt sind das Zinn(II)-Salz der 2-Butyloctansäure, d.h. Zinn(II)-(2-butyloctoat), und das Zinn(II)-Salz der 2-Hexyldecansäure, d.h. Zinn(In-(2-hexyldecanoat).

Die erfindungsgemäßen Zinn(II)-Salze wirken als Katalysatoren bei der Herstellung von Polyurethanschaum aus den Komponenten A und B. Die erfindungsgemäßen Zinn(II)-Salze weisen gegenüber den aus dem Stand der Technik bekannten Zinn(II)-Salzen den technischen Vorteil auf, dass diese bei guter Verarbeitbarkeit einen Polyurethanschaum ergeben mit niedrigen Emissionswerten (wie beispielsweise der VOC-Wert gemessen nach der Methode VDA 278) und mit einer guten Alterungsbeständigkeit (wie beispielsweise der Druckverformungsrest).

Komponente B

Als Komponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (II)

$$Q(NCO)_n \qquad (II)$$

in der
n = 2 - 4, vorzugsweise 2 -3,
und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder
einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendüsocyanat bzw. vom 4,4'- und/oder 2,4'-Diphenylmethandiisocyanat ableiten. Vorzugsweise wird als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Durchführung des Verfahrens zur Herstellung von Polyurethanschaumstoffen

Die Polyurethanschaumstoffe können nach verschiedenen Verfahren der Blockschaumstoffherstellung oder aber in Formen hergestellt werden. Zur Durchführung des erfindungsgemäßen Verfahrens werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient wie sie in US 2 764 565 beschrieben werden. Einzelheiten über Verarbeitungseinrichtungen, die auch erfindungsgemäß infrage kommen, werden im Vieweg und Höchtlen (Hrsg.): Kunststoff-Handbuch, Band VII, Carl-Hanser-Verlag, München 1966, S. 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz in Frage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist. Sie kann aber auch so durchgeführt werden, dass das Formteil eine kompakte Haut und einen zelligen Kern aufweist. Erfindungsgemäß kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter sog. "overcharging" gearbeitet; eine derartige Verfahrensweise ist z. B. aus US 3 178 490 und US 3 182 104 bekannt.

Bei der Formverschäumung werden vielfach an sich bekannte "äußere Trennmittel" wie Siliconöle mitverwendet. Man kann aber auch sogenannte "innere Trennmittel", verwenden, gegebenenfalls im Gemisch mit äußeren Trennmitteln, wie dies beispielsweise aus DE-OS 21 21 670 und DE-OS 23 07 589 hervorgeht.

Die Polyurethanschaumstoffe werden vorzugsweise durch Blockverschäumung oder nach dem an sich bekannten Doppeltransportbandverfahren (siehe beispielsweise "Kunststoffhandbuch", Band VII, Carl Hanser Verlag, München Wien, 3. Auflage 1993, S. 148) hergestellt.

Vorzugsweise wird das erfindungsgemäße Verfahren angewandt zur Herstellung von Polyurethanweichschaumstoffen mit einer Rohdichte (auch als Raumgewicht bezeichnet) von 10 kg m$^{-3}$ bis 200 kg m$^{-3}$, besonders bevorzugt von 15 kg m$^{-3}$ bis 80 kg m$^{-3}$.

**Beispiele**

Komponente A1:

A1-1    trifunktionelles Polyetherpolyol mit einer OH-Zahl von 48 mg KOH/g, hergestellt durch DMC-katalysierte Alkoxylierung von Glycerin mit einem Gemisch von Propylenoxid und Ethylenoxid im Mengenverhältnis 89/11.

A1-2    trifunktionelles Polyetherpolyol mit einer OH-Zahl von 56 mg KOH/g, hergestellt durch DMC-katalysierte Alkoxylierung von Glycerin mit einem Gemisch von Propylenoxid und Ethylenoxid im Mengenverhältnis 99/1.

A1-3    Zusatzmittel VP.PU84WB78 (Polyetherpolyol-Zubereitung mit einer OH-Zahl von 136 mg KOH/g, Bayer MaterialScience AG, Leverkusen Deutschland).

Komponente A3: Wasser Komponente A4:

A4-1    Bis[2-dimethylamino)ethyl]ether (70 Gew.-%) in Dipropylenglykol (30 Gew.-%) (Niax® Catalyst A-1, Momentive Performance Chemicals, Leverkusen, Deutschland).

(fortgesetzt)

| A4-2 | 1,4-Diazabicyclo[2.2.2]octan (33 Gew.-%) in Dipropylenglykol (67 Gew.-%) (Dabco® 33 LV, Air Products, Hamburg, Deutschland). |
|---|---|
| A4-3 | Polyethersiloxan-basierender Schaumstoffstabilisator Tegostab® BF 2370 (Evonik Goldschmidt GmbH, Deutschland). |
| A4-4 | Polyethersiloxan-basierender Schaumstoffstabilisator Tegostab® B 8232 (Evonik Goldschmidt GmbH, Deutschland). |

Komponente A5:

| A5-1: | Zinn(II)-Salz der 2-Butyloctansäure. |
|---|---|
| A5-2: | Zinn(II)-Salz der 2-Hexyldecansäure. |
| A5-3: | Zinn(II)-Salz der 2-Ethylhexansäure (Addocat® SO, Rheinchemie, Mannheim, Deutschland). |
| A5-4: | Zinn(II)-Salz der Neodecansäure. |
| A5-5 | Zinn(II)-Salz der Ölsäure. |
| A5-6 | Zinn(II)-Salz der Ricinolsäure (Kosmos® EF, Evonik Goldschmidt GmbH, Deutschland). |

Allgemeine Vorschrift zur Herstellung der Sn(II)-Salze A5-1, A5-2, A5-4 und A5-5 :

Als Carbonsäure werden jeweils eingesetzt:
Für die Herstellung von A5-1: 2-Butyloctansäure.
Für die Herstellung von A5-2: 2-Hexyldecansäure.
Für die Herstellung von A5-4: Neodecansäure.
Für die Herstellung von A5-5: Ölsäure.

Unter Rühren werden zu einer Lösung aus 50 ml wasserfreiem Methanol und 0,2 mol der jeweiligen Carbonsäure 36,0 g einer 30%igen Lösung von Natriummethylat in Methanol getropft. Nach 1 h werden 100 ml wasserfreies Toluol zugefügt und dann eine Lösung von 18,96 g (0,1 mol) wasserfreiem $SnCl_2$ in 25 ml wasserfreiem Methanol zugetropft. Nach 1 h wird vom Reaktionsgemisch unter reduziertem Druck (50 mbar) das Lösungsmittel entfernt, dann 100 -ml wasserfreies Toluol zugesetzt und 5 min gerührt. Anschließend wird die erhaltene Mischung filtriert. Vom resultierenden Filtrat wird unter reduziertem Druck (50 mbar) das Lösungsmittel abdestilliert, wobei das jeweilige Sn(II)-Salz als Rückstand erhalten wird.

Nach dieser allgemeinen Vorschrift wurden die nachstehenden Sn(II)-Salze hergestellt und in der nachfolgend aufgeführten Ausbeute und Qualität erhalten:

| A5-1: | Ausgehend von 40,5 g 2-Butyloctansäure wurden 46,5 g Zinn(II)-Salz der 2-Butyloctansäure als Flüssigkeit erhalten. Analyse: Sn gef. 23,0%; ber. 22,8%. |
|---|---|
| A5-2: | Ausgehend von 51,4 g 2-Hexyldecansäure wurden 54,9 g Zinn(II)-Salz der 2-Hexyldecansäure als Flüssigkeit erhalten. Analyse: Sn gef. 18,5%, ber. 18,8%. |
| A5-4 | Ausgehend von 34,4 g Neodecansäure wurden 36 g Zinn(II)-Salz der Neodecansäure als Flüssigkeit erhalten. Analyse: Sn gef. 25,0%, ber. 25,7%. |
| A5-5 | Ausgehend von 54,4 g Ölsäure wurden 60 g Zinn(II)-Salz der Ölsäure als Flüssigkeit erhalten. Analyse: Sn gef.: 18,0%, ber. 17,9%. |

Komponente B:

| B-1: | Gemisch aus 2,4- und 2,6-TDI im Gewichtsverhältnis 80 : 20 und mit einem NCO-Gehalt von 48 Gew.-%. |
|---|---|
| B-2: | Gemisch aus 2,4- und 2,6-TDI im Gewichtsverhältnis 65 : 35 und mit einem NCO-Gehalt von 48 Gew.-%. |

Herstellung der Polyurethanschaumstoffe

Unter den für die Herstellung von Polyurethanschaumstoffen üblichen Verarbeitungsbedingungen werden die Ausgangskomponenten im Einstufenverfahren mittels Blockverschäumung verarbeitet. In der Tabelle 1 angegeben ist die Kennzahl der Verarbeitung (danach ergibt sich die einzusetzende Menge an Komponente B im Verhältnis zu Komponente A). Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (III)$$

Die Raumgewicht wurde bestimmt gemäß DIN EN ISO 845.

Die Stauchhärte (CLD 40%) wurde bestimmt gemäß DIN EN ISO 3386-1-98 bei einer Verformung von 40%, 4. Zyklus.

Die Zugfestigkeit und die Bruchdehnung wurden bestimmt gemäß DIN EN ISO 1798.

Der Druckverformungsrest (DVR 90%) wurde bestimmt gemäß DIN EN ISO 1856-2000 bei 90% Verformung.

Der Druckverformungsrest (DVR 50%) wurde bestimmt gemäß DIN EN 1856-2000 (22 h, 70°C) bei 50% Verformung.

Die mechanischen Eigenschaften nach Alterung im Dampfautoklav wurden bestimmt gemäß DIN EN 1856-2000 (3 Tage, 3 Zyklen bei 5 h, 120°C).

Die mechanischen Eigenschaften nach Heißluftalterung wurden bestimmt gemäß DIN EN 1856-2000 (7 Tage, 140°C).

Die relative Änderung der Stauchhärte nach Alterung im Dampfautoklav bzw. nach Heißluftalterung wird berechnet gemäß Formel (IV):

$$\Delta Stauchh\ddot{a}rte = \frac{[\text{Stauchhärte nach Alterung}] - [\text{Stauchhärte vor Alterung}]}{[\text{Stauchhärte vor Alterung}]} \bullet 100\% \qquad (IV)$$

Die Emissionswerte (VOC und FOG) wurden bestimmt nach der Methode VDA 278.

Tabelle 1: Polyurethanweichschaumstoffe, Rezepturen und Eigenschaften

|  |  | 1 | 2 | 3 (vgl.) | 4 (Vgl.) |
|---|---|---|---|---|---|
| A1-1 | Gew.-Tle. | 95,5 | 95,5 | 95,5 | 95,5 |
| A3 | Gew.-Tle. | 3,42 | 3,42 | 3,42 | 3,42 |
| A4-1 | Gew.-Tle. | 0,03 | 0,03 | 0,03 | 0,03 |
| A4-2 | Gew.-Tle. | 0,09 | 0,09 | 0,09 | 0,09 |
| A4-3 | Gew.-Tle. | 0,96 | 0,96 | 0,96 | 0,96 |
| A5-1 | Gew.-Tle. | 0,23 |  |  |  |
| A5-2 | Gew.-Tle. |  | 0,23 |  |  |
| A5-3 | Gew.-Tle. |  |  | 0,15 |  |
| A5-4 | Gew.-Tle. |  |  |  | 0,17 |
| B-1 | Gew.-Tle. | 48,4 | 48,4 | 48,4 | 48,4 |
| Kennzahl |  | 115 | 115 | 115 | 115 |
| **Eigenschaften** |  |  |  |  |  |
| Raumgewicht | [kg/m$^3$] | 27,6 | 28,3 | 27,1 | 27,4 |
| Stauchhärte | [kPa] | 4,03 | 3,67 | 3,82 | 4,61 |
| Zugfestigkeit | [kPa] | 88 | 92 | 93 | 99 |
| Bruchdehnung | [%] | 123 | 163 | 141 | 137 |
| Druckverformungsrest | [%] | 6,0 | 5,2 | 5,8 | 11,7 |
| VOC (VDA 278) | [mg/kg] | 16 | 11 | 112 | 146 |
| FOG (VDA 278) | [mg/kg] | 48 | 50 | 34 | 46 |

Die erfindungsgemäßen Katalysatoren A5-1 (Zinn(II)-Salz der 2-Butyloctansäure) und A5-2 (Zinn(II)-Salz der 2-Hexyldecansäure) haben den Vorteil, dass diese bei Raumtemperatur flüssig sind und eine gute katalytische Aktivität als Katalysator bei der Herstellung von Polyurethanschaumstoffen zeigen. Die resultierenden Polyurethanweichschaumstoffe (erfindungsgemäße Beispiele 1 und 2) weisen gute mechanische Eigenschaften auf sowie sehr niedrige VOC-Werte im Emissionstest nach VDA 278.

Werden aus dem Stand der Technik bekannte Zinn(II)-Salze als Katalysatoren eingesetzt, resultieren im Falle des Zinn(II)-Salzes der 2-Ethylhexansäure (Komponente A5-3) ungünstig hohe VOC-Werte (Vergleichsbeispiel 3) bzw. im Falle des Zinn(II)-Salzes der Neodecansäure (Komponente A5-4) vergleichsweise hohe Druckverformungsrestwerte.

Wird in den Rezepturen der Tabelle 1 als Komponente A5 das Zinn(II)-Sa!z der Ölsäure eingesetzt (Komponente A5-5), führt dies zu unbrauchbaren Polyurethanschaumstoffen, weil das Reaktionsgemisch bei der Herstellung nicht abbindet.

Tabelle 2: Polyurethanweichschaumstoffe, Rezepturen und Eigenschaften

| | | 5 | 6 | 7 (Vgl.) | 8 (Vgl.) | 9 (Vgl.) |
|---|---|---|---|---|---|---|
| A1-2 | Gew.-Tle. | 75,26 | 75,26 | 75,26 | 75,21 | 75,21 |
| A1-3 | Gew.-Tle. | 21,85 | 21,85 | 21,85 | 21,84 | 21,84 |
| A3 | Gew.-Tle. | 2,14 | 2,14 | 2,14 | 2,14 | 2,14 |
| A4-1 | Gew.-Tle. | 0,07 | 0,07 | 0,07 | 0,14 | 0,14 |
| A4-4 | Gew.-Tle. | 0,68 | 0,68 | 0,69 | 0,68 | 0,68 |
| A5-1 | Gew.-Tle. | 0,34 | | | | |
| A5-2 | Gew.-Tle. | | 0,34 | | | |
| A5-3 | Gew.-Tle. | | | 0,16 | | |
| A5-4 | Gew.-Tle. | | | | 0,19 | |
| A5-6 | Gew.-Tle. | | | | | 0,34 |
| B-2 | Gew.-Tle. | 36,7 | 36,7 | 36,7 | 36,7 | 36,7 |
| Kennzahl | | 112 | 112 | 112 | 112 | 112 |
| **Eigenschaften** | | | | | | |
| Raumgewicht | [kg/m$^3$] | 44 | 44,9 | 50,5 | 42,2 | 40,7 |
| Stauchhärte | [kPa] | 5,98 | 5,85 | 6,95 | 5,93 | 5,19 |
| Zugfestigkeit | [kPa] | 117 | 153 | 124 | 96 | 108 |
| Bruchdehnung | [%] | 128 | 135 | 124 | 117 | 127 |
| DVR 50% | [%] | 1,6 | 1,4 | 1,8 | 2,1 | 2,5 |
| DVR 90% | [%] | 3,4 | 3,2 | 3,8 | 4,0 | 4,6 |
| Werte nach Alterung im Dampfautoklav: | | | | | | |
| △ Stauchhärte | [%] | -6,2 | -6,5 | -10,8 | -6,4 | -6,9 |
| Zugfestigkeit | [kPa] | 126 | 117 | 113 | 107 | 77 |
| Bruchdehnung | [%] | 222 | 191 | 221 | 201 | 189 |
| DVR 50% | [%] | 4,2 | 4,4 | 4,2 | 3,7 | 3,5 |
| Werte nach Heißluftalterung: | | | | | | |
| △ Stauchhärte | [%] | -8,6 | -4,8 | -2,8 | -17,4 | -18,0 |
| Zugfestigkeit | [kPa] | 174 | 152 | 143 | 125 | 104 |
| Bruchdehnung | [%] | 140 | 178 | 166 | 182 | 164 |
| DVR 50% | [%] | 1,7 | 1,8 | 1,7 | 1,9 | 1,6 |

Die Ergebnisse der Tabelle 2 veranschaulichen die mechanischen Eigenschaften auch nach Alterung der Polyurethanweichschaumstoffe, welche mit den erfindungsgemäßen Katalysatoren A5-1 (Zinn(II)-Salz der 2-Butyloctansäure) und A5-2 (Zinn(II)-Salz der 2-Hexyldecansäure) hergestellt wurden (erfindungsgemäße Beispiele 5 und 6): Es wurde überraschenderweise gefunden, dass die mit Hilfe der erfindungsgemäßen Zinn(II)-Salze A5-1 bzw. A5-2 hergestellten Polyurethanschaumstoffe das mechanische Werteniveau von mit dem Zinn(II)-Salz der 2-Ethylhexansäure hergestellten Polyurethanschaumstoffe erreichen. Wie anhand der vorgehend in Tabelle 1 gezeigt, haben aber die mit den erfindungsgemäßen Zinn(II)-Salzen hergestellte Polyurethanschaumstoffe den zusätzlichen Vorteil, dass diese deutlich niedrigere Emissionswerte aufweisen.

Werden aber die Zinn(II)-Salze A5-4 bzw. A5-6 als Katalysatoren eingesetzt, resultiert ein vergleichsweise ungünstiges Werteniveau nach Alterung im Dampfautoklav bzw. nach Heißluftalterung (Vergleichsbeispiele 8 und 9).

**Patentansprüche**

1. Verfahren zur Herstellung von Polyurethanschaumstoffen aus

   A1 gegenüber Isocyanaten reaktionsfähigen Wasserstoffatomen aufweisenden Verbindungen mit einem Molekulargewicht von 400 - 15.000,
   A2 gegebenenfalls gegenüber Isocyanaten reaktionsfähigen Wasserstoffatomen aufweisenden Verbindungen mit einem Molekulargewicht von 62 - 399,
   A3 Wasser und/oder physikalisches Treibmittel,
   A4 ggf. Hilfs- und Zusatzstoffe wie

   a) von Komponente A5 verschiedene Katalysatoren,
   b) oberflächenaktive Zusatzstoffe,
   c) Pigmente oder Flammschutzmittel,

   A5 mindestens ein Zinn(II)-Salz der Formel (I)

   $$Sn(C_xH_{2x+1}COO)_2 \qquad (I)$$

   eingesetzt wird, wobei
   x eine ganze Zahl von 11 bis 15 bedeutet und die Alkylkette $C_xH_{2x+1}$ eine verzweigte Kohlenstoffkette ist.
   B Di- oder Polyisocyanaten.

2. Verfahren zur Herstellung von Polyurethanschaumstoffen gemäß Anspruch 1. **dadurch gekennzeichnet, dass** die Herstellung aus

   A1 75 bis 99,5 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 400 - 15.000,
   A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 62 - 399,
   A3 0,5 bis 25 Gew.-Teile (bezogen auf die Summe der Gew.-Teile der Komponenten A1 bis A4) Wasser und/oder physikalische Treibmittel,
   A4 0 bis 10 Gew.-Teile (bezogen auf die Summe der Gew.-Teile der Komponenten A1 bis A4) Hilfs- und Zusatzstoffe wie

   a) von Komponente A5 verschiedene Katalysatoren,
   b) oberflächenaktive Zusatzstoffe,
   c) Pigmente oder Flammschutzmittel,

   A5 0,01 - 5 Gew.-Teile (bezogen auf die Summe der Gew.-Teile der Komponenten A1 bis A4) mindestens ein Zinn(II)-Salz der Formel (I)

   $$Sn(C_xH_{2x+1}COO)_2 \qquad (I)$$

EP 2 256 141 B1

eingesetzt wird, wobei
x eine ganze Zahl von 1.1 bis 15 bedeutet und die Alkylkette $C_xH_{2x+1}$ eine verzweigte Kohlenstoffkette ist.
B Di- oder Polyisocyanaten,

wobei die Herstellung bei einer Kennzahl von 50 bis 250 erfolgt.

3. Verfahren nach einem der Ansprüchen 1 bis 2, wobei als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat eingesetzt wird.

4. Verfahren nach Anspruch 1 oder 2, wobei die Herstellung bei einer Kennzahl von 95 bis 125 erfolgt.

5. Verfahren nach Anspruch 1 oder 2 zur Herstellung von Polyurethanweichschaumstoffen mit einer Rohdichte von 10 kg m$^{-3}$ bis 200 kg m$^{-3}$.

6. Verfahren nach Anspruch 1 oder 2, wobei als Komponente A5 das Zinn(II)-Salz der 2-Butyloctansäure eingesetzt wird.

7. Verfahren nach Anspruch 1 oder 2, wobei als Komponente A5 das Zinn(II)-Salz der 2-Hexyldecansäure eingesetzt wird.

8. Verfahren nach Anspruch 1 oder 2, wobei außer Komponente A5 keine weiteren Zinn(II)-Salze von Carbonsäuren eingesetzt werden.

9. Polyurethanschaumstoffe erhältlich nach einem Verfahren gemäß einem der Ansprüche 1 bis 8.


**Claims**

1. Process for producing polyurethane foams from

    A1 compounds comprising hydrogen atoms reactive towards isocyanates and having a molecular weight of from 400 to 15,000;
    A2 optionally compounds comprising hydrogen atoms reactive towards isocyanates and having a molecular weight of from 62 to 399;
    A3 water and/or physical blowing agent;
    A4 optionally auxiliaries and additional substances, for example

        a) catalysts different from component A5,
        b) surface-active additional substances,
        c) pigments or flame retardants,

    A5 at least one tin(II) salt of the formula (I)

    $$Sn(C_xH_{2x+1}COO)_2 \qquad (I),$$

    where
    x is an integer from 11 to 15 and the alkyl chain $C_xH_{2x+1}$ is a branched hydrocarbon chain, and
    B di- or polyisocyanates.

2. Process according to Claim 1 for producing polyurethane foams, wherein the production process uses

    A1 from 75 to 99.5 parts by weight (based on the entirety of the parts by weight of components A1 to A4) of compounds comprising hydrogen atoms reactive towards isocyanates and having a molecular weight of from 400 to 15,000,
    A2 from 0 to 10 parts by weight (based on the entirety of the parts by weight of components A1 to A4) of compounds comprising hydrogen atoms reactive towards isocyanates and having a molecular weight of from 62 to 399,

10

A3 from 0.5 to 25 parts by weight (based on the entirety of the parts by weight of components A1 to A4) of water and/or physical blowing agents,
A4 from 0 to 10 parts by weight (based on the entirety of the parts by weight of components A1 to A4) of auxiliaries and additional substances such as
a) catalysts different from component A5,
b) surface-active additional substances,
c) pigments or flame retardants,
A5 from 0.01 to 5 parts by weight (based on the entirety of the parts by weight of the components A1 to A4) of at least one tin(II) salt of the formula (I)

$$Sn\,(C_xH_{2x+1}COO)_2 \qquad (I),$$

where
x is an integer from 11 to 15 and the alkyl chain $C_xH_{2x+1}$ is a branched hydrocarbon chain, and
B di- or polyisocyanates,

where the production process takes place with an index of from 50 to 250.

3. Process according to Claim 1 or 2, where component B used comprises at least one compound selected from the group consisting of tolylene 2,4- and 2,6-diisocyanate, diphenylmethane 4,4'-and 2,4'- and 2,2'-diisocyanate and polyphenyl polymethylene polyisocyanate.

4. Process according to Claim 1 or 2, where the production process takes place with an index of from 95 to 125.

5. Process according to Claim 1 or 2 for producing polyurethane foams with an apparent density of from 10 kg m$^{-3}$ to 200 kg m$^{-3}$.

6. Process according to Claim 1 or 2, where component A5 used comprises the tin(II) salt of 2-butyloctanoic acid.

7. Process according to Claim 1 or 2, where component A5 used comprises the tin(II) salt of 2-hexyldecanoic acid.

8. Process according to Claim 1 or 2, where no tin(II) salt of carboxylic acids are used other than component A5.

9. Polyurethane foams obtainable by a process according to any of Claims 1 to 8.

**Revendications**

1. Procédé de fabrication de mousses de polyuréthane, à partir de

A1 des composés comprenant des atomes d'hydrogène réactifs avec les isocyanates ayant un poids moléculaire de 400 à 15 000,
A2 éventuellement des composés comprenant des atomes d'hydrogène réactifs avec les isocyanates ayant un poids moléculaire de 62 à 399,
A3 de l'eau et/ou un agent gonflant physique,
A4 éventuellement des adjuvants et additifs, tels que

a) des catalyseurs différents du composant A5,
b) des additifs tensioactifs,
c) des pigments ou des agents ignifuges,

A5 au moins un sel d'étain (II) de formule (I)

$$Sn(C_xH_{2x+1}COO)_2 \qquad (I),$$

x signifiant un nombre entier de 11 à 15 et la chaîne alkyle $C_xH_{2x+1}$ étant une chaîne carbonée ramifiée, et
B des di- ou polyisocyanates.

**2.** Procédé de fabrication de mousses de polyuréthane selon la revendication 1, **caractérisé en ce que** la fabrication a lieu à partir de

A1 75 à 99,5 parties en poids (par rapport à la somme des parties en poids des composants A1 à A4) de composés comprenant des atomes d'hydrogène réactifs avec les isocyanates ayant un poids moléculaire de 400 à 15 000,
A2 0 à 10 parties en poids (par rapport à la somme des parties en poids des composants A1 à A4) de composés comprenant des atomes d'hydrogène réactifs avec les isocyanates ayant un poids moléculaire de 62 à 399,
A3 0,5 à 25 parties en poids (par rapport à la somme des parties en poids des composants A1 à A4) d'eau et/ou d'agents gonflants physiques,
A4 0 à 10 parties en poids (par rapport à la somme des parties en poids des composants A1 à A4) d'adjuvants et d'additifs, tels que

a) des catalyseurs différents du composant A5,
b) des additifs tensioactifs,
c) des pigments ou des agents ignifuges,

A5 0,01 à 5 parties en poids (par rapport à la somme des parties en poids des composants A1 à A4) d'au moins un sel d'étain (II) de formule (I)

$$Sn(C_xH_{2x+1}COO)_2 \qquad (I),$$

x signifiant un nombre entier de 11 à 15 et la chaîne alkyle $C_xH_{2x+1}$ étant une chaîne carbonée ramifiée, et
B des di- ou polyisocyanates,

la fabrication ayant lieu à un indice de 50 à 250.

**3.** Procédé selon l'une quelconque des revendications 1 à 2, dans lequel au moins un composé choisi dans le groupe constitué par le diisocyanate de 2,4- et 2,6-toluylène, le diisocyanate de 4,4'- et 2,4'- et 2,2'-diphénylméthane et le polyisocyanate de polyphénylpolyméthylène est utilisé en tant que composant B.

**4.** Procédé selon la revendication 1 ou 2, dans lequel la fabrication a lieu à un indice de 95 à 125.

**5.** Procédé selon la revendication 1 ou 2, pour la fabrication de mousses souples de polyuréthane présentant une densité brute de 10 kg·m$^{-3}$ à 200 kg·m-$^{3}$.

**6.** Procédé selon la revendication 1 ou 2, dans lequel le sel d'étain (II) de l'acide 2-butyloctanoïque est utilisé en tant que composant A5.

**7.** Procédé selon la revendication 1 ou 2, dans lequel le sel d'étain (II) de l'acide 2-hexyldécanoïque est utilisé en tant que composant A5.

**8.** Procédé selon la revendication 1 ou 2, dans lequel aucun sel d'étain (II) d'acides carboxyliques n'est utilisé à l'exception du composant A5.

**9.** Mousses de polyuréthane pouvant être obtenues par un procédé selon l'une quelconque des revendications 1 à 8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1121802 A
- US 3397158 A
- DE 1694142 A
- DE 1694215 A
- DE 1720768 A
- EP 0007502 A
- EP 0000389 A
- EP 0176013 A
- US 2764565 A
- US 3178490 A
- US 3182104 A
- DE OS2121670 A
- DE OS2307589 A

**In der Beschreibung aufgeführte Nicht-Patentliteratur**

- Polyurethane, herausgegeben von Vieweg und Höchtlein. Kunststoff-Handbuch. Carl Hanser Verlag, 1966, vol. VII
- der Neuauflage dieses Buches. Carl Hanser Verlag, 1993
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Kunststoff-Handbuch. Carl-Hanser-Verlag, 1966, vol. VII, 121-205
- Kunststoffhandbuch. Carl Hanser Verlag, 1993, vol. VII, 148